# EUROPEAN PATENT SPECIFICATION

(11) **EP 1 903 433 B1**
(45) Date of publication and mention of the grant of the patent: **12.12.2012**
(21) Application number: 07100185.3
(22) Date of filing: 05.01.2007
(51) Int. Cl.: G06F 9/318

(54) **System and method for processing user defined extended operation**
System und Verfahren zum Verarbeiten einer vom Benutzer definierten erweiterten Operation
Système et procédé de traitement d'une opération étendue définie par l'utilisateur

(30) Priority: 18.09.2006 KR 20060090060
(43) Date of publication of application: 26.03.2008
(73) Proprietor: Samsung Electronics Co., Ltd., Suwon-si, Gyeonggi-do, 443-742 (KR)
(72) Inventor: Kim, Hee Seok,, Gyeonggi-do 445-736 (KR)
(74) Representative: Greene, Simon Kenneth

(56) References cited:
- WO-A-96/10226
- WO-A-97/35251
- US-A- 5 890 010

## Description

### BACKGROUND OF THE INVENTION

Apparatus and methods consistent with the present invention relate to processing an extended operation, more particularly, to processing a primitive operation and an extended operation to enhance efficiency of an operation process via a software pipelining.

As devices including an operation device executing a program, such as a computer, a personal digital assistant (PDA), a cellular phone, and the like, have come into wide use, research on a method of quickly processing an operation for executing the program is underway. There is software pipelining technology as a result of the research.

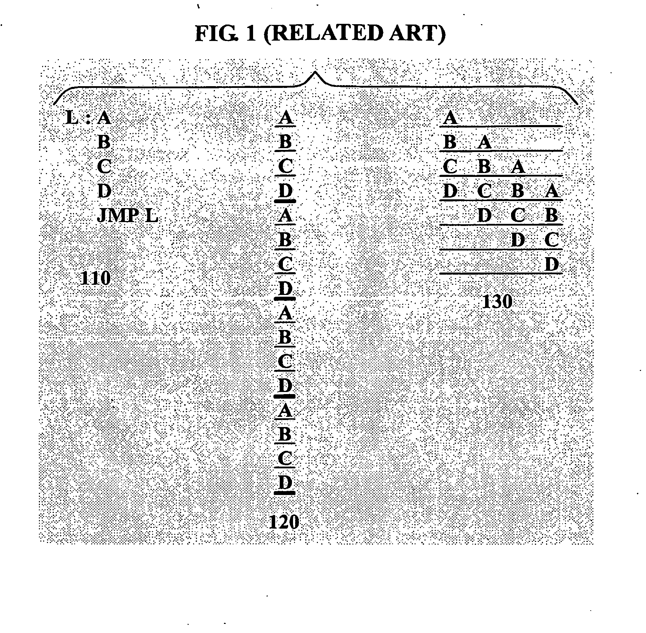

FIG. 1 is a diagram illustrating a method of implementing a software pipelining technology.

A pseudopodia listing 110 illustrates a part of a software program that is required to processed in an operation process system. In FIG. 1, A, B, C, and D indicate an operation that is a basic unit configuring each program and generally include the operations processed via an arithmetic logic unit (ALU), for example, addition, subtraction, multiplication, shift, logical sum, logical multiplication, and the like, and the operation provided for a memory access, for example, a load, a store, and the like. Also, an instruction code, i.e., JMP L of the last line indicates that it is required to return to a location L: located at the operation A of the uppermost line. Specifically, when a program in psuedocode listing 110 is executed, the operations of A, B, C, and D are implemented in order and the operations from A to D are continuously repeated.

Another psuedocode listing 120 illustrates an operation process in the case of executing the program in the psuedocode listing 110, eliminating a use of the software pipelining technology. The program in the psuedocode listing 110 is executed in an indefinite loop due to a lack of an exit condition, but the program in the psuedocode listing 110 is here limited to within a loop of repeating four times for convenience of comparison. Similar to the other psuedocode listing 120, unless the software pipelining is implemented, the operation of A, B, C, and D is implemented in order and the operation of A is implemented again. Similarly, when the operation of A, B, C and D repeats four times, a total of sixteen operations are implemented. In FIG. 1, each operation is referred to as a cycle and an operation time of total sixteen cycles is required in the psuedocode listing 120.

Still another psuedocode listing 130 illustrates an operation process in the case of executing the program in the psuedocode listing 110 by using the software pipelining technology. As illustrated in FIG. 1, the software pipelining technology is a technology where a first operation A of a first loop is implemented, and when a second operation B is implemented, a first operation A of the second loop is simultaneously implemented. When the above operations of A, B, C, and D are independent of each other, up to four operations are simultaneously implemented. The operation may be implemented more efficiently by enabling the operation to be simultaneously implemented. In the present example, the operations may be repeatedly implemented four times as illustrated in the psuedocode listing 120, and may be also completed within total seven cycles by simultaneously implementing a maximum of four operations. Similarly, when the software pipelining technology is used, the repetitive operations may be processed with great efficiency.

However, it is required to exclude a conditional flow from the loop to use the software pipelining technology. The conditional flow indicates the operation that lets another operation be implemented depending on a condition. Specifically, the conditional flow indicates the operation to be implemented depending on the condition, for example, in a case where as a result of comparing X with Y, the operation A is implemented when X is larger than Y, and the operation B is implemented when Y is larger than X.

When the above conditional flow is included in the loop, an operation may not be repeatedly implemented in a predetermined order as illustrated in the still another psuedocode listing 130 and accordingly, configuring a pipeline is extremely difficult. When the operation is repeatedly implemented in the case an operation order is set, as illustrated in the still another psuedocode listing 130, an operation group of D, C, B, and A such as the fourth line is repeatedly processed. Thus, when a configuration of the pipeline is simple but another operation is executed, an identical operation group is not repeatedly processed and accordingly, the pipeline may not be configured.

However, since programs generally include conditional flows, when the software pipelining technology is used for only loops excluding the conditional flow, an extent of use may be greatly reduced.

Accordingly, methods of enabling the software pipelining for loops including the conditional flow have been attempted. A method among the methods of enabling the software pipelining for loops including the conditional flow is a method similar to an operation where the conditional flow is excluded and a new operation is implemented by defining as the new operation another operation including the conditional flow and adding hardware for processing the new operation. However, since the method that the conditional flow is excluded and the new operation that is implemented is required to include hardware to process the complex operation, there is a problem that costs are high and a portion including the conditional flow may not be processed except by the new operations defined when the hardware is designed.

Thus, according to the present invention, there is provided an operation process system and method of using the software pipelining technology more generally and efficiently processing the operation by enabling a user to use the software pipelining technology with a loop including a conditional flow, and to define and add the new operation.

International Patent Application Publication Number WO 96/10226 discloses a central processing unit (CPU) incorporating at least one co-processor in addition to a basic arithmetic logic unit.

International Patent Application Publication Number WO 97/35251 presents a CPU including a digital signal processing preprocessor for detecting instruction sequences which perform digital signal processing functions.

### SUMMARY OF THE INVENTION

The present invention provides a system and method of simply using a software pipelining technology.

The present invention also provides a system and method of processing an extended operation in software by enabling a separate processor to process the extended operation.

The present invention also provides a system and method of adding an extended operation desired by a user by processing the extended operation in software.

The present invention also provides a system and method of efficiently using a processor by generating an exception, enabling the processor to process an extended operation, and using an exception handler in the processor.

According to an aspect of the present invention, there is provided an operation processing system according to claim 1.

According to another aspect of the present invention, there is provided an operation processing method according to claim 8.

### BRIEF DESCRIPTION OF THE DRAWINGS

The above and other aspects of the present invention will become apparent and more readily appreciated from the following detailed description of certain exemplary embodiments of the invention, taken in conjunction with the accompanying drawings of which:
FIG. 1 is a diagram illustrating a method of implementing a software pipelining technology;
FIG 2 is a configuration diagram illustrating a configuration of an operation process system according to an exemplary embodiment of the present invention;
FIG. 3 is a configuration diagram illustrating a system configuration for processing an extended operation in an operation process system according to an exemplary embodiment of the present invention; and
FIG. 4 is a flowchart illustrating a flow of an operation process method according to an exemplary embodiment of the present invention.

### DETAILED DESCRIPTION OF EXEMPLARY EMBODIMENTS OF THE INVENTION

Reference will now be made in detail to exemplary embodiments of the present invention, examples of which are illustrated in the accompanying drawings, wherein like reference numerals refer to the like elements throughout. The exemplary embodiments are described below in order to explain the present invention by referring to the figures.

In the present invention, an operation indicates a basic unit comprising a program. The program is executed in a device, such as a computer and the like, is made of a plurality of operations and the operations are generally defined in the case of designing for a process, and modified to be processed in hardware. Thus, after the hardware is configured, further operations may not be added. Also, since the present invention has a characteristic that a user-defined extended operation may be added, the operation processed in the conventional hardware is referred to as a "primitive operation" and an "extended operation" is an operation that is not a primitive operation, i.e. a user-defined operation is referred to as an extended operation.

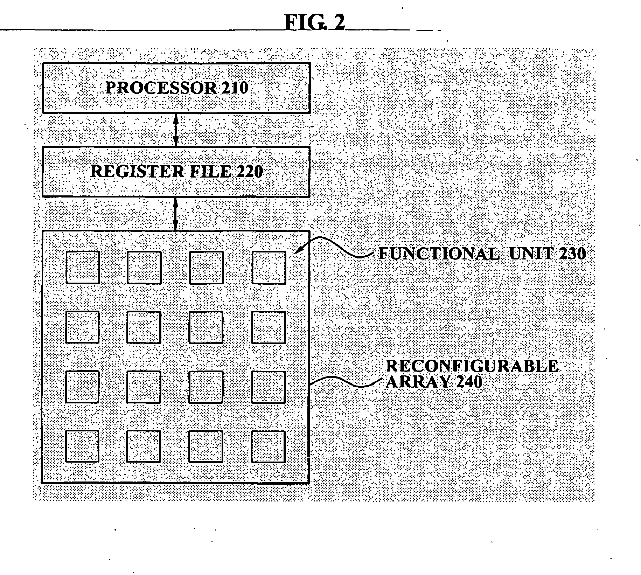

FIG. 2 is a configuration diagram illustrating a configuration of an operation process system according to an exemplary embodiment of the present invention.

The operation process system according to the exemplary embodiment of the present invention includes a processor 210, a register file 220 and a plurality of functional units 230. A reconfigurable array 240 is comprised of the plurality of functional units 230. Hereinafter, a specific description is given for each element.

The processor 210 is a device processing the operation of the program and is located in a device such as a computer, a personal digital assistant (PDA), a portable multimedia player (PMP), a cellular phone, and the like, and executed in each device. The program is made of a set of a plurality of operations to be processed in the processor 210. The operation generally includes the operations, for example, addition, subtraction, multiplication, shift, logical sum, logical multiplication, and the like, processed via an arithmetic logic unit (ALU) and the operation provided for a memory access, for example, a load, a store and the like. Accordingly, the processor 210 may include an ALU device processing the arithmetic operation and a device enabling a memory to be accessed. A type of the operation processed varies according to the type of the processor 210. Also, the present invention is not limited to the type of the processor 210 and any type of processor may be applied.

The register file 220 is generally memory that is a set of registers used to access data for the processor 210. Since access times of when a general main memory storing the data in the device, such as the computer and the like, accesses the data is relatively great, a cycle may be greatly increased when the processor 210 directly accesses the main memory. Accordingly, the register is designed to be located close to the processor 210, to store the data of the main memory in the register according to a memory access instruction in the processor 210, and to enable the processor 210 to access the register and to identify the data as required.

In the present invention, when each of the plurality of functional units 230 processes the extended operation by controlling the processor 210, each of the plurality of functional units 230 enables the processor 210 to process the necessary operation within the shortest period of time by recording an input value required for the operation in the register file 220 which is a memory the processor 210 may access most quickly.

Also, the register file 220 in the present invention may enable the data between each of the plurality of functional units 230 and the processor 210 to be exchanged by using any one register of the register file 220 and may be configured so that each of the plurality of functional units 230 and the processor 210 separately and respectively access an individual register of the register file 220, and the data between the register file 220 and the processor 210 and functional units 230 is received and transmitted. The present invention is not limited to a configuration of the register file 220.

Each of the plurality of functional units 230 indicates the hardware configured to process the operation and the operation processed classified by each of the plurality of functional units 230 is defined. Accordingly, there is the diverse plurality of functional units 230 according to the type of the operation processed. Each of the plurality of functional units 230 generally processes the operation by receiving a plurality of input values and returns a result value of the operation.

Also, each of the plurality of functional units 230 may include a function of controlling the processor to process the extended operation. For example, each of the plurality of functional units 230 may enable the processor to process the extended operation corresponding to the exception generated in each of the plurality of functional units 230 by generating an exception identified in the processor.

The reconfigurable array 240 is made of the plurality of functional units 230 and enables a plurality of operations to be simultaneously processed by operating the plurality of functional units 230. Similarly, since the plurality of operations may be simultaneously processed, software pipelining may be embodied by using the reconfigurable array 240. The reconfigurable array 240 may include each of the plurality of functional units 230 processing the diverse operations and may include a connection line exchanging the data and a temporary memory device storing the exchanged data. Also, the reconfigurable array 240 may include the connection line with the register file 220 to transmit the data to the processor 210 and store the data in the register file 220.

Each of the plurality of functional units 230 included in the reconfigurable array 240 may implement each operation and enable another operation to be implemented according to an operation result by transmitting the operation result to another plurality of functional units. Thus, according to an operation order, it is required to appropriately locate each of the plurality of functional units 230 to efficiently transmit the data.

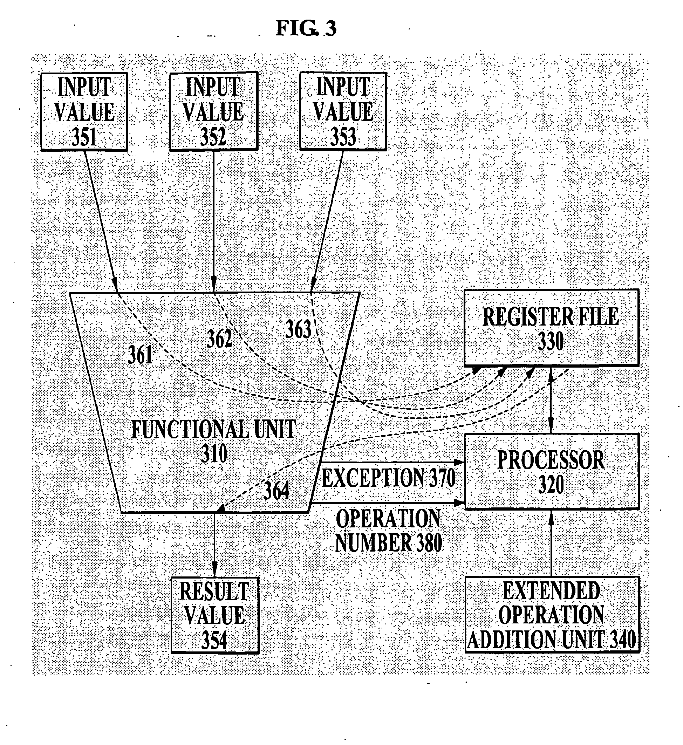

FIG. 3 is a configuration diagram illustrating a system configuration for processing an extended operation in an operation process system according to an exemplary embodiment of the present invention.

As illustrated in FIG. 3, the operation process system according to the exemplary embodiment of the present invention includes one of a plurality of functional units 310, a processor 320, a register file 330, and an extended operation addition unit 340. Hereinafter, a specific description is given classified by each element.

Each of the plurality of functional units 310 processes the primitive operation, and controls the processor 320 to process the extended operation. Each of the plurality of functional units 310 is a hardware device processing the operation that is a basic unit configuring a program, and returns a result value 354 after implementing the operation by receiving a plurality of input values 351, 352 and 353 required for the operation. A type of the operation processed is set from when the hardware in each of the plurality of functional units 310 is designed. For example, a certain plurality of functional units in the plurality of functional units 310 may be configured to process an operation such as addition and subtraction, and another plurality of functional units in the plurality of functional units 310 may be configured to process an operation such as addition, subtraction, multiplication, and division. Also, the other plurality of functional units in the plurality of functional units 310 may be configured to process an operation such as floating point operation.

Similarly, the operation processed by using the hardware designed in each of the plurality of functional units 310 is referred to as a "primitive operation", and each of the plurality of functional units 310 processes the primitive operation and returns a result of the primitive operation. The plurality of input values 351, 352, and 353 may be input in each of the plurality of functional units 310 to process the primitive operation, and a number of input values required according to the type of the operation varies.

Similarly, if the operation required to be processed in each of the plurality of functional units 310 is the primitive operation, the operation may be processed by using the hardware of each of the plurality of functional units 310. However, since the extended operation is an operation that may not be processed by using the hardware of each of the plurality of functional units 310 if the operation required to be processed is the extended operation, the operation may be processed by the processor 320. The extended operation is the operation including a control flow that makes it difficult to embody the software pipelining and may have a program form where the plurality of primitive operations is combined. Similarly, there is an effect to simply embody the software pipelining by processing the extended operation configured by combining the plurality of primitive operations including the control flow at one time by controlling the processor 320 in each of the plurality of functional units 310.

If the operation required to be processed in each of the plurality of functional units 310 is the extended operation, each of the plurality of functional units 310 copies the input values 351, 352 and 353 of the extended operation in the register file 330 and enables the processor 320 to recognize the input values. Accordingly, the processor may access the input values required for the operation in a memory that is the simplest to access. After copying the input values, each of the plurality of functional units 310 generates an exception 370 in the processor 320. The exception 370 indicates a signal generated to stop a current job and immediately process when a problem is generated in the device such as the computer, or a situation required to be processed is generated due to receiving an input from an input device. Accordingly, when the exception is generated, the processor 320 stops the current job and implements the operation corresponding to the exception 370. Similarly, a module to enable the operation corresponding to the exception 370 to be implemented is referred to as an "exception handler". The exception handler identifies the type of the exception 370 and requires the operation corresponding to the type of the exception 370 to be processed. Since the processor generally includes a similar basic exception handler, the processor 320 may be controlled by each of the plurality of functional units 310 by merely adding the operation to require the exception handler to process the exception 370 from each of the plurality of functional units 310.

Since the extended operation is configured in the form of the program, when each of the plurality of functional units 310 generates the exception 370, the exception handler of the processor 320 may identify the exception 370 and enable the program for processing the extended operation to be executed. In this instance, if there are various extended operations, the extended operation may require the exception handler to determine the program to execute for processing the certain extended operation by transmitting an operation number 380 of the extended operation along with the exception 370 to the processor 320.

The processor 320 is a device executing the program for processing the extended operation and, similar to the description above, executes the program corresponding to the type of the extended operation according to the operation of the exception handler. Similarly, to process the extended operation, the processor 320 may store program code of the program in a recording device to separately process the plurality of extended operations and thereby process the extended operation. In this instance, to identify the type of the extended operation, the processor 320 may store the program code corresponding to the operation number 380 and identify the program code corresponding to the operation number 380, which is received with the exception 370 from each of the plurality of functional units 310, from the recording device.

Also, the processor 320 may receive the input values, which are required to process the extended operation, from the register file 330. Since each of the plurality of functional units 310 copies the input values to the register file 330, there is an effect in that the processor 320 may receive the input values from the register file that is the memory that may be most simply accessed. Also, the processor 320 may process the extended operation, record the process result in the register file 330 and require each of the plurality of functional units to provide the process result. Each of the plurality of functional units 310 may receive the process result with reference to the register file 330 and return the process result as a result value 354.

Similar to the description above, if the extended operation is processed, since a side using each of the plurality of functional units 310 may input the input values 351, 352 and 353 in each of the plurality of functional units 310 regardless of an internal operation of each of the plurality of functional units 310, and receive the result value 354 according to the operation, the extended operation made of the plurality of primitive operations including the control flow may be similarly processed as one primitive operation. Accordingly, since the operation may be similarly processed as a case of excluding the control flow, the software pipelining is simply embodied.

For example, when there is a loop configured similar to a following description, the software pipelining may not be embodied due to the control flow in the fourth and fifth lines in a conventional art.
1: while(TRUE)
2: a = 10;
3: b = a + c;
4: if(a > b) d = a;
5: else d = b;
6: }

Accordingly, it is possible to modify the program into a program excluding the control flow similar to the following description by defining the extended operation referred to as "max" processing the fourth and fifth lines of the above program.
1: while (TRUE) {
2: a = 10;
3: b = a + c;
4: d = max(a, b);
5: }

Max actually includes control flow in the above program, but each of the plurality of functional units 310 processes the operation by controlling the processor 320, and accordingly, the operation is processed as one operation such as an addition operation. Thus, the loop of the program may become the program made of three operations excluding the control flow and embody software pipelining.

Since the register file 330 is a memory used for transmitting the data from each of the plurality of functional units 310 to the processor 320 and may be directly and quickly accessed by the processor 320, the extended operation may be quickly processed. The register file 330 may be made of a plurality of the register files, be configured so that each of the plurality of functional units 310 and the processor 320 may separately and respectively access an individual register of the register file 330, use the data, and exchange the data with the register file 330, and may be configured to jointly have one register file.

The extended operation addition unit 340 receives a request for an additional extended operation, and configures the processor 320 to process the extended operation corresponding to the request. The request may include the program code of the program executed to process the extended operation. Since the extended operation has the program in a form made of the plurality of primitive operations, the extended operation may be processed in the processor 320 when the program for processing the extended operation is stored in a memory device. Accordingly, when the extended operation is added according to a user's request for an additional extended operation, it is required to receive and store the program code corresponding to the extended operation.

Also, the extended operation addition unit 340 assigns the extended operation corresponding to the request with an operation number, modifies the received program code to correspond to the operation number, and thereby stores the program code in the recording device. Accordingly, by merely transmitting the operation number from each of the plurality of functional units 310 to the processor 320, the processor may process the extended operation by identifying the extended operation required to process, and identify the program code corresponding to the operation number from the memory device, to be operated.

Similarly, there is the effect that the user may extend the operation according to the user's need while eliminating a need for adding the hardware device by enabling the user to merely add the extended operation via the extended operation addition unit 340.

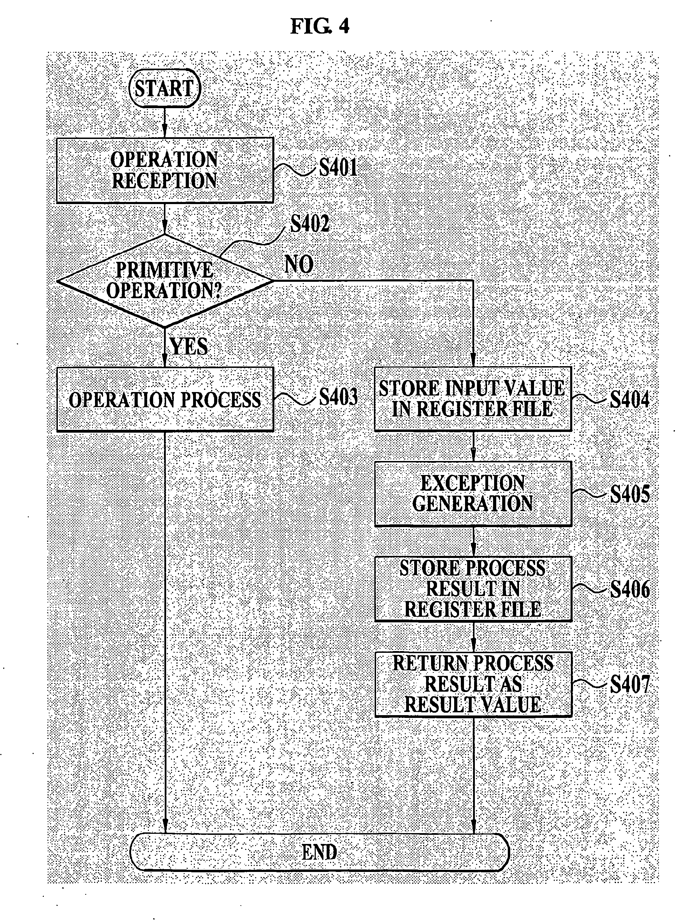

FIG. 4 is a flowchart illustrating a flow of an operation process method according to an exemplary embodiment of the present invention.

In operation S401, the operation required to be processed in each of the plurality of functional units is received. Each of the plurality of functional units generally processes the operation by reading the program stored in the memory. The operation may include both the primitive operation and the extended operation.

In operation S402, whether the operation received in operation S401 is the primitive operation is identified. To discriminate between the primitive operation and the extended operation, a bit to identify whether the operation is the primitive operation or the extended operation may be added to an operation code, and a discrimination between the primitive operation and the extended operation may also be made by other diverse methods. Any method of discriminating between the primitive operation and the extended operation may be applied to the present invention and the present invention is not limited to the above discrimination method.

In operation S403, if the operation received in operation S401 is determined as the primitive operation in S402, the operation is processed. Since each of the plurality of functional units originally includes the hardware for processing the primitive operation, the primitive operation may be processed using the hardware.

In operation S404, if the operation received in operation S401 is determined as the extended operation, the input values of the operation are stored in the register file. Since the register file is a memory device that the processor may directly access, the input values may be simply identified in the processor by enabling each of the plurality of functional units to store the input values in the register file.

In operation S405, the extended operation may be processed by generating the exception in the processor. When the exception is generated, the exception handler of the processor is operated and processes the exception. Thus, there is the effect that the processor may be controlled eliminating a need for separate communication by configuring the exception handler to process the extended operation corresponding to the exception.

In operation S406, the processor processes the extended operation and stores the process result in the register file. Each of the plurality of functional units controlling the processor to process the extended operation identifies and returns the process result of the extended operation. Accordingly, since the side using each of the plurality of functional units may not identify whether each of the plurality of functional units directly processes the operation or processes the operation by controlling the processor, the extended operation may be processed similar to the primitive operation.

In operation S407, each of the plurality of functional units receives the process result stored in the register file and returns the process result as a result value. Similarly, each of the plurality of functional units may transmit the input values and receive the result value by eliminating a need for configuring the processor and a separate communication channel and by using the register file.

The operation process method according to the above-described exemplary embodiments of the present invention may be recorded in computer-readable media including program instructions to implement various operations embodied by a computer. The media may also include, alone or in combination with the program instructions, data files, data structures, and the like. The media and program instructions may be those specially designed and constructed for the purposes of the present invention, or they may be of the kind well-known and available to those having skill in the computer software arts. Examples of computer-readable media include magnetic media such as hard disks, floppy disks, and magnetic tape; optical media such as CD ROM disks and DVD; magneto-optical media such as optical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described exemplary embodiments of the present invention.

According to the exemplary embodiments of the present invention, it is possible to simply use a software pipelining technology.

Also, according to the exemplary embodiments of the present invention, it is possible to process an extended operation in software by enabling a separate processor to process the extended operation.

Also, according to the exemplary embodiments of the present invention, it is possible to add an extended operation desired by a user by processing the extended operation in software.

Also, according to the exemplary embodiments of the present invention, it is possible to efficiently use a processor by generating an exception, enabling the processor to process an extended operation, and using an exception handler in the processor.

Although a few exemplary embodiments of the present invention have been shown and described, the present invention is not limited to the described exemplary embodiments. Instead, it would be appreciated by those skilled in the art that changes may be made to these exemplary embodiments without departing from the principles of the invention, the scope of which is defined by the claims.

## Claims

1. An operation processing system, the system comprising:
a plurality of functional units (230), each of the plurality of functional units being operable to process a primitive operation, a primitive operation being an operation for processing by conventional hardware;
a processor (210) which is operable to process an extended operation according to a control of at least one of the plurality of functional units, an extended operation being a series of primitive operations comprising a control flow instruction; and
an extended operation addition unit (340) which is adapted to receive a request for an extended operation, and to configure the processor (210) to enable the processor to process the extended operation corresponding to the request,
and **characterized in that** the request comprises a program code which processes the extended operation in the processor, wherein the at least one of the plurality of functional units (230) is arranged to store an input value of an operation in a register file (220), and to process the operation by generating an exception in the processor (210) if the operation is an extended operation.

2. The system of claim 1, wherein the at least one of the plurality of functional units (230) is arranged to transmit an operation number (380) which designates a type of the operation, to the processor (210).

3. The system of claim 2, wherein the extended operation addition unit (340) comprises:
a recording device which is arranged to store program code which is used for processing the operation, the stored program code corresponding to the operation number (380),
and wherein the processor (210) is adapted to implement the stored program code corresponding to the operation number (380) with reference to the recording device, and to process the operation.

4. The system of claim 1, 2 or 3, wherein the processor (210) is arranged to store a process result of the operation in the register file (220), and the at least one of the plurality of functional units (230) is arranged to receive the process result from the register file (220).

5. The system of claim 4, wherein the at least one of the plurality of functional units (230) is arranged to return the received process result as a result value of the operation.

6. The system of any preceding claim, wherein a reconfigurable array (240) comprises the plurality of functional units (230).

7. The system of claim 1, wherein the extended operation addition unit (340) is adapted to assign the user-desired extended operation corresponding to the request, with an operation number, and to modify the program code to correspond to the operation number, and to thereby store the program code in a recording device.

8. An operation processing method, the method comprising:
receiving an operation from at least one of a plurality of functional units (230);
processing the operation with the one of the plurality of functional units (230) if the operation is a primitive operation, a primitive operation being an operation for processing by conventional hardware;
processing an extended operation with a processor (210) according to a control of at least one of the plurality of functional units if the operation is an extended operation, an extended operation being a series of primitive operations comprising a control flow instruction;
receiving a request for an extended operation;
configuring the processor (210) to enable the processor to process the extended operation corresponding to the request,
and **characterized in that** the request comprises a program code which processes the extended operation in the processor, wherein the step of processing the extended operation comprises:
storing, using the at least one of the plurality of functional units (230), an input value of the operation in a register file (220); and
processing, using the at least one of the plurality of functional units (230), the operation by generating an exception in the processor (210) if the operation is an extended operation.

9. The method of claim 8, wherein the processing the extended operation further comprises:
storing in the register file (220), using a processor (210), a process result of processing the operation; and
receiving, using the at least one of the plurality of functional units (230), the process result from the register file (220).

10. The method of claim 9, wherein the processing the extended operation further comprises:
returning, using the at least one of the plurality of functional units (230), the received process result as a result value.

11. A computer program product embodied on a computer readable medium loadable into the memory of a digital computer, comprising program instructions for performing all of the steps of any of claims 8 to 11.

## Patentansprüche

1. Operationsverarbeitungssystem, wobei das System Folgendes aufweist:
eine Vielzahl von Funktionseinheiten (230), wobei jede der Vielzahl von Funktionseinheiten zum Verarbeiten einer primitiven Operation funktionell ist, wobei eine primitive Operation eine Operation zur Verarbeitung durch konventionelle Hardware ist,
einen Prozessor (210), der zum Verarbeiten einer erweiterten Operation gemäß einer Steuerung von wenigstens einer der Vielzahl von Funktionseinheiten funktionell ist, wobei eine erweiterte Funktion eine Reihe primitiver Operationen ist, die eine Steuerflussanweisung aufweist, und
eine Erweiterte-Operation-Additionseinheit (340), die zum Erhalten einer Anfrage für eine erweiterte Operation und zum Konfigurieren des Prozessors (210), so dass der Prozessor die erweiterte Operation entsprechend der Anfrage verarbeiten kann, ausgeführt ist,
und **dadurch gekennzeichnet, dass** die Anfrage einen Programmcode aufweist, der die erweiterte Operation im Prozessor verarbeitet, wobei die wenigstens eine der Vielzahl von Funktionseinheiten (230) zum Speichern eines Eingabewertes einer Operation in einer Registerdatei (220) und zum Verarbeiten der Operation durch Generieren einer Ausnahme in dem Prozessor (210), wenn die Operation eine erweiterte Operation ist, angeordnet ist.

2. System nach Anspruch 1, wobei die wenigstens eine der Vielzahl von Funktionseinheiten (230) zum Übertragen einer Operationsnummer (380), die einen Typ der Operation bezeichnet, an den Prozessor (210) angeordnet ist.

3. System nach Anspruch 2, wobei die Erweiterte-Operation-Additionseinheit (340) Folgendes aufweist:
eine Aufzeichnungsvorrichtung, die zum Speichern von Programmcode angeordnet ist, der zum Verarbeiten der Operation verwendet wird, wobei der gespeicherte Programmcode der Operationsnummer (380) entspricht,
und wobei der Prozessor (210) zum Implementieren des der Operationsnummer (380) entsprechenden gespeicherten Programmcodes mit Bezug auf die Aufzeichnungsvorrichtung und zum Verarbeiten der Operation ausgeführt ist.

4. System nach Anspruch 1, 2 oder 3, wobei der Prozessor (210) zum Speichern eines Prozessergebnisses der Operation in der Registerdatei (220) angeordnet ist und die wenigstens eine der Vielzahl von Funktionseinheiten (230) zum Erhalten des Prozessergebnisses aus der Registerdatei (220) angeordnet ist.

5. System nach Anspruch 4, wobei die wenigstens eine der Vielzahl von Funktionseinheiten (230) zum Zurückgeben des erhaltenenen Prozessergebnisses als einen Ergebniswert der Operation angeordnet ist.

6. System nach einem der vorhergehenden Ansprüche, wobei eine rekonfigurierbare Anordnung (240) die Vielzahl von Funktionseinheiten (230) aufweist.

7. System nach Anspruch 1, wobei die Erweiterte-Operation-Additionseinheit (340) ausgeführt ist, um der vom Benutzer gewünschten, der Anfrage entsprechenden erweiterten Operation eine Operationsnummer zuzuweisen und um den Programmcode zu modifizieren, so dass er der Operationsnummer entspricht, und um dadurch den Programmcode in einer Aufzeichnungsvorrichtung zu speichern.

8. Operationsverarbeitungsverfahren, wobei das Verfahren Folgendes aufweist:
Erhalten einer Operation von wenigstens einer von einer Vielzahl von Funktionseinheiten (230),
Verarbeiten der Operation mit der einen der Vielzahl von Funktionseinheiten (230), wenn die Operation eine primitive Operation ist, wobei eine primitive Operation eine Operation zur Verarbeitung durch konventionelle Hardware ist,
Verarbeiten einer erweiterten Operation mit einem Prozessor (210) gemäß einer Steuerung von wenigstens einer der Vielzahl von Funktionseinheiten, wenn die Operation eine erweiterte Operation ist, wobei eine erweiterte Operation eine Reihe primitiver Operationen ist, die eine Steuerflussanweisung aufweist,
Erhalten einer Anfrage für eine erweiterte Operation,
Konfigurieren des Prozessors (210), so dass der Prozessor die der Anfrage entsprechende erweiterte Operation verarbeiten kann,
und **dadurch gekennzeichnet, dass** die Anfrage einen Programmcode aufweist, der die erweiterte Operation im Prozessor verarbeitet, wobei der Schritt des Verarbeitens der erweiterten Operation Folgendes aufweist:
Speichern eines Eingabewertes der Operation in einer Registerdatei (220) mithilfe der wenigstens einen der Vielzahl von Funktionseinheiten (230) und
Verarbeiten der Operation durch Generieren einer Ausnahme in dem Prozessor (210), wenn die Operation eine erweiterte Operation ist, mithilfe der wenigstens einen der Vielzahl von Funktionseinheiten (230).

9. Verfahren nach Anspruch 8, wobei das Verarbeiten der erweiterten Operation ferner Folgendes aufweist:
Speichern eines Prozessergebnisses des Verarbeitens der Operation in der Registerdatei (220) mithilfe eines Prozessors (210) und
Erhalten des Prozessergebnisses aus der Registerdatei (220) mithilfe der wenigstens einen der Vielzahl von Funktionseinheiten (230).

10. Verfahren nach Anspruch 9, wobei das Verarbeiten der erweiterten Operation ferner Folgendes aufweist:
Zurückgeben des erhaltenen Prozessergebnisses als einen Ergebniswert mithilfe der wenigstens einen der Vielzahl von Funktionseinheiten (230).

11. Computerprogrammprodukt, das auf einem in den Speicher eines digitalen Rechners ladbaren computerlesbaren Medium ausgestaltet ist, umfassend Programmanweisungen zum Durchführen aller Schritte nach einem der Ansprüche 8 bis 11.

## Revendications

1. Système de traitement d'opérations, le système comprenant :
une pluralité d'unités fonctionnelles (230), chacune de la pluralité d'unités fonctionnelles pouvant être utilisée pour traiter une opération primitive, une opération primitive étant une opération devant être traitée par un matériel classique ;
un processeur (210) qui peut être utilisé pour traiter une opération étendue selon une commande d'au moins une de la pluralité d'unités fonctionnelles, une opération étendue étant une série d'opérations primitives comprenant une instruction de flux de commande ; et
une unité d'addition d'opération étendue (340) qui est adaptée pour recevoir une demande d'opération étendue, et configurer le processeur (210) pour lui permettre de traiter l'opération étendue correspondant à la demande,
et **caractérisé en ce que** la demande comprend un code programme qui traite l'opération étendue dans le processeur, la ou les unités de la pluralité d'unités fonctionnelles (230) étant agencées de manière à stocker une valeur d'entrée d'une opération dans un fichier registre (220), et à traiter l'opération en générant une exception dans le processeur (210) si l'opération est une opération étendue.

2. Système selon la revendication 1, dans lequel la ou les unités de la pluralité d'unités fonctionnelles (230) sont agencées pour transmettre au processeur (210) un numéro d'opération (380) qui désigne un type de l'opération.

3. Système selon la revendication 2, dans lequel l'unité d'addition d'opération étendue (340) comprend :
un dispositif d'enregistrement qui est agencé pour stocker un code programme qui est utilisé pour traiter l'opération, le code programme stocké correspondant au numéro d'opération (380),
et dans lequel le processeur (210) est adapté pour mettre en oeuvre le code programme stocké correspondant au numéro d'opération (380) avec référence au dispositif d'enregistrement et pour traiter l'opération.

4. Système selon la revendication 1, 2 ou 3, dans lequel le processeur (210) est agencé pour stocker un résultat de traitement de l'opération dans le fichier registre (220), et la ou les unités de la pluralité d'unités fonctionnelles (230) sont agencées pour recevoir le résultat de traitement du fichier registre (220).

5. Système selon la revendication 4, dans lequel la ou les unités de la pluralité d'unités fonctionnelles (230) sont agencées pour retourner le résultat de traitement reçu comme une valeur de résultat de l'opération.

6. Système selon l'une quelconque des revendications précédentes, dans lequel un réseau reconfigurable (240) comprend la pluralité d'unités fonctionnelles (230).

7. Système selon la revendication 1, dans lequel l'unité d'addition d'opération étendue (340) est adaptée pour affecter à l'opération étendue souhaitée par l'utilisateur et correspondant à la demande, un numéro d'opération, et pour modifier le code programme pour correspondre au numéro d'opération, et stocker ainsi le code programme dans un dispositif d'enregistrement.

8. Procédé de traitement d'opérations, le procédé comprenant :
la réception d'une opération d'au moins une d'une pluralité d'unités fonctionnelles (230) ;
le traitement de l'opération avec l'unité de la pluralité d'unités fonctionnelles (230) si l'opération est une opération primitive, une opération primitive étant une opération devant être traitée par un matériel classique ;
le traitement d'une opération étendue avec un processeur (210) selon une commande d'au moins une de la pluralité d'unités fonctionnelles si l'opération est une opération étendue, une opération étendue étant une série d'opérations primitives comprenant une instruction de flux de commande ;
la réception d'une demande d'opération étendue ;
la configuration du processeur (210) pour permettre au processeur de traiter l'opération étendue correspondant à la demande,
et **caractérisé en ce que** la demande comprend un code programme qui traite l'opération étendue dans le processeur, l'étape de traitement de l'opération étendue comprenant :
le stockage, au moyen de la ou des unités de la pluralité d'unités fonctionnelles (230), d'une valeur d'entrée de l'opération dans un fichier registre (220) ; et
le traitement, au moyen de la ou des unités de la pluralité d'unités fonctionnelles (230), de l'opération en générant une exception dans le processeur (210) si l'opération est une opération étendue.

9. Procédé selon la revendication 8, dans lequel le traitement de l'opération étendue comprend en outre :
le stockage dans le fichier registre (220), au moyen d'un processeur (210), d'un résultat de traitement du traitement de l'opération ; et
la réception, au moyen de la ou des unités de la pluralité d'unités fonctionnelles (230), du résultat de traitement du fichier registre (220).

10. Procédé selon la revendication 9, dans lequel le traitement de l'opération étendue comprend en outre :
le retour, au moyen d'au moins une de la pluralité d'unités fonctionnelles (230), du résultat de traitement reçu en tant que valeur de résultat.

11. Programme informatique inclus sur un support lisible par ordinateur et pouvant être chargé dans la mémoire d'un ordinateur numérique, comprenant des instructions de programme pour exécuter toutes les étapes de l'une quelconque des revendications 8 à 11.
